# EUROPEAN PATENT APPLICATION

(11) **EP 4 782 184 A2**
(43) Date of publication of application: **29.07.2026**
(21) Application number: 26185127.3
(22) Date of filing: 15.06.2026
(51) Int. Cl.: B29C 64/124, B29C 64/232, B29C 64/245, B29C 64/259, B29C 64/321, B29C 64/364, B33Y 10/00, B33Y 30/00, B33Y 40/00

(54) **3D PRINTING METHOD, FORMING MECHANISM AND PRINTING DEVICE**

(30) Priority: 31.07.2025 CN 202511073917; 31.12.2025 CN 202512059254; 30.09.2025 CN 202511433214
(71) Applicant: Shining 3D Tech Co., Ltd., Hangzhou, Zhejiang 311258 (CN)
(72) Inventor: Zhao, Xiaobo, Hangzhou, 311258 (CN); Taalab, Elias, Hangzhou, 311258 (CN); Chen, Da, Hangzhou, 311258 (CN); He, Junlin, Hangzhou, 311258 (CN)
(74) Representative: Metida

(57) **Abstract**

The present application provides a 3D printing method, a forming mechanism (100), and a printing device. The method includes: providing a forming mechanism (100) including an accommodation cavity (124), a light-transmitting assembly (111), and a platform assembly (120), the accommodation cavity (124) being prefilled with printing material, the light-transmitting assembly (111) allowing light to pass through to cure the printing material, the platform assembly (120) being movable away from or towards the light-transmitting assembly (111), the platform assembly (120) including a forming platform (121), a forming cavity (140) being formed between the forming platform (121) and the light-transmitting assembly (111), and the accommodation cavity (124) including the forming cavity (140); (121) moving the forming platform (121) away from the light-transmitting assembly (111), and increasing air pressure within the accommodation cavity (124); moving the forming platform (121), and causing the printing material to be cured and forming a printing layer.

## Description

### TECHNICAL FIELD

The present application relates to a technical field of Three-Dimensional (3D) printing, and in particular, to a 3D printing method, a forming mechanism, and a printing device.

### BACKGROUND

Most existing stereolithography 3D printing devices realize layered 3D printing operations by using a motor-driven lead screw to drive a printing platform to move in a Z-axis direction. The above method is relatively difficult for printing high-viscosity resin materials.

### SUMMARY

In a first aspect, an embodiment of the present application provides a 3D printing method, including: providing a forming mechanism including an accommodation cavity, a light-transmitting assembly, and a platform assembly, the accommodation cavity being prefilled with printing material, the light-transmitting assembly allowing light to pass through to cure the printing material, the platform assembly being movable away from or towards the light-transmitting assembly, the platform assembly including a forming platform, a forming cavity being formed between the forming platform and the light-transmitting assembly, and the accommodation cavity including the forming cavity; releasing the forming platform, including: moving the forming platform away from the light-transmitting assembly, and increasing air pressure within the accommodation cavity; curing the printing material, including: moving the forming platform to next printing position, and causing the printing material to be cured by light on the forming platform and forming a printing layer.

In a second aspect, an embodiment of the present application provides a forming mechanism, including: an accommodation cavity; a light-transmitting assembly; and a platform assembly, wherein the accommodation cavity is prefilled with printing material, the light-transmitting assembly allows light to pass through to cure the printing material, the platform assembly is movable away from or towards the light-transmitting assembly, the platform assembly includes a forming platform, a forming cavity is formed between the forming platform and the light-transmitting assembly, and the accommodation cavity includes the forming cavity.

In a third aspect, an embodiment of the present application provides a printing device, including: the forming mechanism provided in any of the preceding aspects of the embodiments of the present application.

### BRIEF DESCRIPTION OF THE DRAWINGS

The accompanying drawings, which are incorporated in and constitute a part of the specification, illustrate embodiments consistent with the present application and, together with the description, serve to explain the principles of the present application. Obviously, the drawings in the following description are some embodiments of the present invention. For those skilled in the art, other drawings can be obtained based on these drawings without creative effort.
FIG. 1 is a schematic structural diagram of a 3D printing device provided by an embodiment of the present application.
FIG. 2 is a schematic structural diagram of a forming mechanism provided by an embodiment of the present application.
FIG. 3 is a schematic structural diagram of a forming mechanism provided by an embodiment of the present application.
FIG. 4 is a schematic structural diagram of a forming mechanism provided by an embodiment of the present application.
FIG. 5 is a schematic diagram of a forming mechanism according to an embodiment of the present application.
FIG. 6 is a cross-sectional view of a printing device provided by an embodiment of the present application.
FIG. 7 is a flowchart of a 3D printing method provided by an embodiment of the present application.
FIG. 8 is a structural diagram of a 3D printing apparatus provided by an embodiment of the present application.

Reference numerals:100-forming mechanism, 110-outer cylinder, 111-light-transmitting assembly, 120-platform assembly, 121-forming platform, 122-top cover, 123-inner cylinder, 124-accommodation cavity, 130-cover plate, 140-forming cavity, 300-gas injection mechanism, 301-air pump, 302-gas injection connector, 400-driving module, 401-driving member, 402-limiting part.

Through the above drawings, specific embodiments of the present application have been shown, which will be described in more detail later. The drawings and written descriptions are not intended to limit the scope of the concept of the present application in any way, but to illustrate the concepts of the present application to those skilled in the art by referring to specific embodiments.

### DETAILED DESCRIPTION

To make purposes, technical solutions, and advantages of the embodiments of the present application clearer, the technical solutions in the embodiments of the present application will be clearly and completely described below with reference to the accompanying drawings in the embodiments of the present application. Obviously, the described embodiments are part of the embodiments of the present application, not all of them. The components of the embodiments of the present application described and shown in the drawings herein can generally be arranged and designed in various different configurations.

Therefore, the following detailed description of the embodiments of the present application provided in the accompanying drawings is not intended to limit the scope of the claimed application, but merely represents selected embodiments of the present application. Based on the embodiments of the present application, all other embodiments obtained by those of ordinary skill in the art without creative work shall fall within the protection scope of the present application.

It should be noted that similar reference numerals and letters denote similar items in the following drawings. Therefore, once an item is defined in one drawing, the item does not need to be further defined and explained in subsequent drawings.

In the description of the present application, it should be noted that the orientation or positional relationships indicated by terms "center", "upper", "lower", "left", "right", "vertical", "horizontal", "inner", "outer", etc., are based on the orientation or positional relationships shown in the drawings, or the orientation or positional relationships in which a product of the invention is conventionally placed during use. The orientation or positional relationships are only for the convenience of describing the present application and simplifying the description, and do not indicate or imply that a device or an element referred to must have a specific orientation, be constructed and operated in a specific orientation, and therefore should not be construed as limiting the present application. Furthermore, the terms "first", "second", "third", etc. are used for descriptive purposes only and are not to be construed as indicating or implying relative importance.

Furthermore, terms such as "horizontal" and "vertical" do not mean that corresponding components are required to be absolutely horizontal or vertical, but may be slightly inclined. For example, "horizontal" merely means that a direction of a corresponding component is more horizontal relative to "vertical", and does not mean that the structure must be completely horizontal, but can be slightly inclined.

In the description of the present application, it should also be noted that, unless otherwise clearly specified and defined, the terms "disposed", "installed", "connected", and "joined" should be understood broadly. For example, the term "connected" may be a fixed connection, a detachable connection, or an integral connection; the term "connected" may be a mechanical connection, an electrical connection, or a direct connection, or an indirect connection through an intermediary, or an internal communication between two components. For those of ordinary skill in the art, the specific meanings of the above terms in the present application can be understood based on the specific circumstances.

The detailed description of some embodiments of the present application will be made below in conjunction with the accompanying drawings. The following embodiments and features of the embodiments can be combined with each other provided that there is no conflict between the embodiments. In addition, the step sequences in the following embodiments are merely examples and are not strictly limiting.

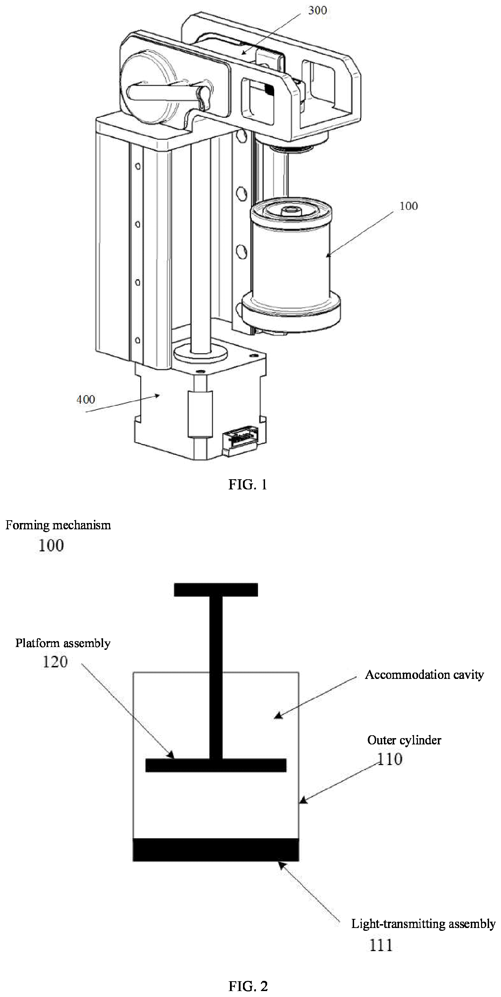

Please refer to FIG. 1, which is a schematic diagram of a 3D printing device provided by an embodiment of the present application. The 3D printing device includes a forming mechanism 100.

The forming mechanism 100 includes: an accommodation cavity 124, a light-transmitting assembly 111, and a platform assembly 120. The accommodation cavity 124 is prefilled with printing material. The light-transmitting assembly 111 allows light to pass through to cure the printing material. The platform assembly 120 is movable away from or towards the light-transmitting assembly 111. The platform assembly 120 includes a forming platform 121. A forming cavity 140 is formed between the forming platform 121 and the light-transmitting assembly 111. The accommodation cavity 124 includes the forming cavity 140.

In one embodiment, the accommodation cavity 124 may be a sealed cavity to facilitate changing air pressure within the accommodation cavity 124.

In one embodiment, the size of the forming mechanism 100 is not less than 8 mm (L) × 8 mm (W) × 8 mm (H) and not greater than 150 mm (L) × 150 mm (W) × 150 mm (H). Specifically, the length, width, and height of the forming mechanism 100 are each not less than 8mm and not greater than 150mm, therefore ensuring that the forming mechanism 100 can achieve printing and enable printing of high-viscosity materials, solving the problem that high-viscosity materials are difficult to quickly and uniformly spread due to poor fluidity in large sizes. In one embodiment, as shown in FIG. 2, which is a schematic structural diagram of the forming mechanism 100 provided by an embodiment of the present application. The forming mechanism 100 includes an outer cylinder 110. An outer cylinder chamber of the outer cylinder 110 is the accommodation cavity 124. The outer cylinder 110 includes the light-transmitting assembly 111 disposed on one side of the outer cylinder chamber of the outer cylinder 110. The platform assembly 120 is slidably and sealably connected to the outer cylinder 110.

In the embodiment, the outer cylinder chamber of the outer cylinder 110 can be directly used as the accommodation cavity 124, and the light-transmitting assembly 111 can be placed at one axial end of the outer cylinder 110. The slidable and sealed connection between the platform assembly 120 and the outer cylinder 110 maintains the airtightness of the accommodation cavity 124 during a release step, enabling precise air pressure control.

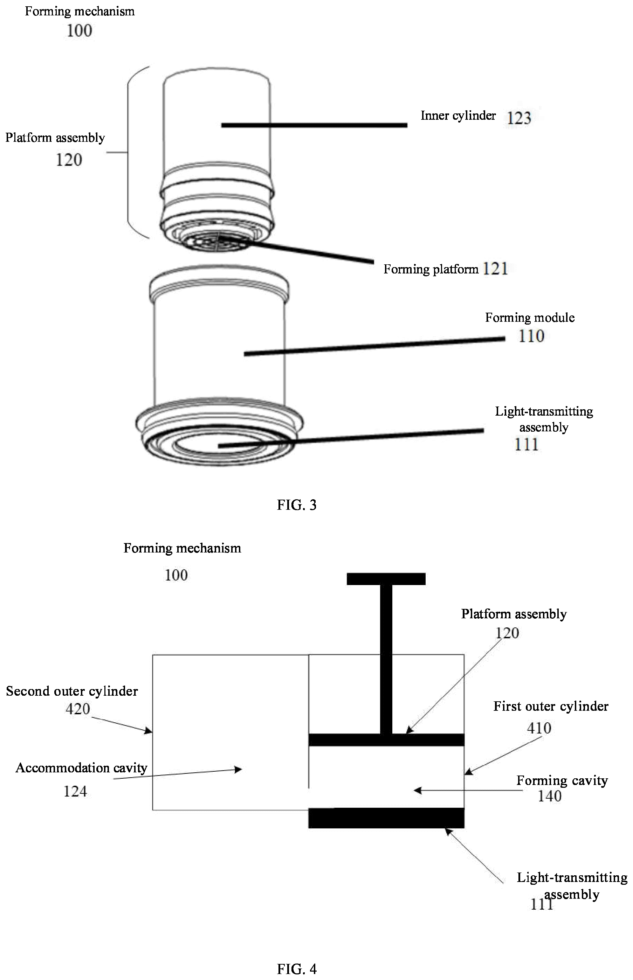

In one embodiment, as shown in FIG. 3, which is a schematic structural diagram of a forming mechanism 100 provided by an embodiment of the present application. The forming mechanism 100 includes an outer cylinder 110. The outer cylinder 110 includes a light-transmitting assembly 111 disposed on one side of an outer cylinder chamber of the outer cylinder 110. The platform assembly 120 is provided with a pressure-bearing surface, which is a wall of the accommodation cavity 124. The pressure-bearing surface intersects with, for example, is perpendicular to, a movement direction of the platform assembly 120.

In one embodiment, the platform assembly 120 includes an inner cylinder 123. The inner cylinder 123 is disposed within the outer cylinder chamber of the outer cylinder 110 and is slidably and sealably connected to the outer cylinder 110. The forming platform 121 is disposed on a side of the inner cylinder 123 facing the light-transmitting assembly 111. An inner cylinder chamber of the inner cylinder 123 is connected to the forming cavity 140. The accommodation cavity 124 includes the inner cylinder chamber. The pressure-bearing surface includes a wall of the inner cylinder chamber of the inner cylinder 123 opposite the forming platform 121.

In the embodiment, the forming mechanism 100 is configured with a dual-cylinder nested structure. The printing material is accommodated in the inner cylinder chamber of the inner cylinder 123. The inner cylinder 123 is slidably and sealably connected to the outer cylinder 110. A design where the inner cylinder chamber of the inner cylinder 123 communicates with the forming cavity 140 allows the printing material to flow between the inner cylinder chamber of the inner cylinder 123 and the forming cavity 140. The inner cylinder chamber of the inner cylinder 123 acts as a material storage reservoir to continuously supply material to the forming cavity 140. The rigid support of the inner cylinder 123 combined with the axial precision control of the slidable seal further improves the movement stability of the platform assembly 120, enhancing printing accuracy.

Optionally, the outer cylinder 110 and the inner cylinder 123 are fitted together in an insertion manner. The shape and size of the inner cylinder 123 match those of the outer cylinder 110 to achieve a slidable seal after insertion. A bottom of the inner cylinder 123 has a liquid outlet hole to allow communication between the outer cylinder chamber of the outer cylinder 110 and the inner cylinder chamber of the inner cylinder 123. To avoid structural interference, a vent can be provided at the top of the inner cylinder 123.

To ensure the seal of the accommodation cavity 124, an inner sidewall of the outer cylinder 110 and an outer sidewall of the inner cylinder 123 are sealed together.

In the embodiment, the size of the forming mechanism 100 is 12 mm (L) × 12 mm (W) × 35 mm (H).

In one embodiment, as shown in FIG. 4, which is a schematic structural diagram of the forming mechanism 100 provided by an embodiment of the present application. The forming mechanism 100 further includes a first outer cylinder 410 and a second outer cylinder 420. The first outer cylinder 410 includes a light-transmitting assembly 111 disposed on one side of a first outer cylinder chamber of the first outer cylinder 410. The platform assembly 120 is disposed within the first outer cylinder chamber of the first outer cylinder 410 and is slidably and sealably connected to the first outer cylinder 410. A second outer cylinder chamber of the second outer cylinder 420 is in communication with the forming cavity 140. The accommodation cavity 124 includes the second outer cylinder chamber 420.

In the embodiment, the forming mechanism 100 can be configured as a dual outer cylinder 110 structure. The platform assembly 120 is slidably and sealably connected to the first outer cylinder 410, ensuring high airtightness of the forming cavity 140 during the release step. The second outer cylinder chamber acts as a material storage reservoir, continuously supplying material to the forming cavity 140 through a communication channel.

In one embodiment, both the outer cylinder 110 and the inner cylinder 123 are cylinders. One axial side of the outer cylinder 110 is an opening, and the other axial side is the light-transmitting assembly 111. One axial side of the inner cylinder 123 is provided with a vent, and the other axial side is the forming platform 121. The inner sidewall of the outer cylinder 110 and the outer sidewall of the inner cylinder 123 are slidably and sealably fitted. The forming platform 121 is oriented towards the light-transmitting assembly 111. A communication port connecting the forming cavity 140 and the inner cylinder chamber is provided on the side of the inner cylinder 123 where the forming platform 121 is located.

In other implementable solutions, the outer cylinder 110 can also be a cylinder of other shapes, for example, a rectangular cylinder or other polygonal cylindrical structures.

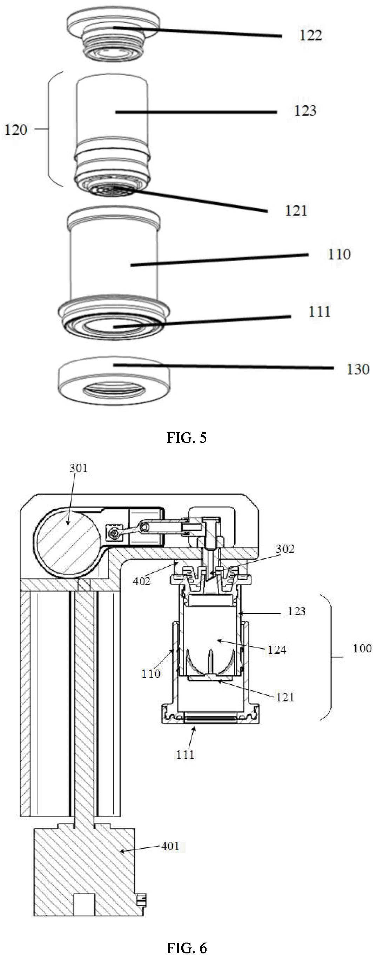

As shown in FIG. 5, which is a schematic diagram of the forming mechanism 100 according to an embodiment of the present application, taking a cylindrical dual-cylinder nested structure as an example. The forming mechanism 100 includes an outer cylinder 110 and a platform assembly 120. Along an axial direction of the outer cylinder 110, one end of the outer cylinder 110 is provided with the light-transmitting assembly 111. The platform assembly 120 includes the forming platform 121 disposed opposite the light-transmitting assembly 111. The platform assembly 120 is at least partially slidably and sealably connected to the other end of the outer cylinder 110. A forming cavity 140 is formed between the platform assembly 120 and the light-transmitting assembly 111. The forming mechanism 100 forms a sealed accommodation cavity 124 for accommodating printing material. The accommodation cavity 124 is in communication with the forming cavity 140. The forming platform 121 can move towards the light-transmitting assembly 111 or away from the light-transmitting assembly 111.

The inner cylinder 123 of the platform assembly 120 can be installed inside the outer cylinder 110. The bottom of the platform assembly 120 can be provided with a ring of spaced hollows, allowing printing material inside the accommodation cavity 124 to flow to the forming cavity 140. The printing material can be, for example, a stereolithography resin liquid. The periphery of the inner cylinder 123 of the platform assembly 120 can be provided with two sealing boundaries for sealing. The top of the platform assembly 120 can be provided with a top cover 122 and a sealing sleeve for sealing the gas inlet.

Optionally, the platform assembly 120 is further provided with a vent in communication with the accommodation cavity 124. The air pressure within the accommodation cavity 124 can be controlled through the vent. For example, gas can be injected into the sealed accommodation cavity 124 to increase the air pressure inside. When the air pressure inside the accommodation cavity 124 is greater than an external air pressure, the platform assembly 120 moves upward (i.e., away from the light-transmitting assembly 111). For another example, pressure can be released from the sealed accommodation cavity 124. When the air pressure inside the accommodation cavity 124 is less than the external air pressure, the platform assembly 120 moves downward (i.e., towards the light-transmitting assembly 111). In the embodiment, the downward movement of the platform assembly 120 is driven by the limiting part 402. Of course, the platform assembly 120 can also be connected to the limiting part 402, and the limiting part 402 drives the platform assembly 120 to move upward. The limiting part 402 is driven by a driving member 401, such as being driven by a motor.

In one embodiment, the vent is located above the liquid level of the printing material. The gas pressure acts on the liquid surface of the printing material, thereby squeezing the printing material. The vent can be provided on the top of the platform assembly 120, or the vent can be provided above a liquid level limit of the platform assembly 120. The liquid level limit is not higher than the maximum liquid level that the platform assembly 120 can accommodate for printing material.

In one embodiment, as shown in FIG. 6, which is a cross-sectional view of a printing device provided by an embodiment of the present application, the printing device further includes a driving module 400. The driving module 400 includes a driving member 401 and a limiting part 402. The driving member 401 is drivingly connected to the limiting part 402. The limiting part 402 is in limiting engagement or fixed connection with the platform assembly 120.

In the embodiment, the driving module 400, through the driving connection between the driving member 401 and the limiting part 402, combined with the limiting engagement or fixed connection between the limiting part 402 and the platform assembly 120, enables the driving module 400 to drive the limiting part 402 to move via the driving member 401. The limiting part 402 can limit the displacement amount of the platform assembly 120, for example, achieving precise control over the movement distance of the platform assembly 120 during a release step or a curing step.

In one embodiment, as shown in FIG. 1 and FIG. 6, the printing device further includes a gas injection mechanism 300. The gas injection mechanism 300 is provided with an air pump 301 and a gas injection connector 302. The air pump 300 is connected to the gas injection connector through an air tube, and the air pump 300 is used for providing the pressure source. The gas injection connector 302 is engaged with the forming mechanism 100 to communicate with the accommodation cavity 124.

In the embodiment, the gas injection mechanism 300 directly communicates with the accommodation cavity 124 through the gas injection connector 302. Then, gas is injected into the accommodation cavity 124 through the gas injection connector 302 of the gas injection mechanism 300 to change the air pressure inside the accommodation cavity 124. For example, the gas is injected into the accommodation cavity 124 through the gas injection connector 302 of the gas injection mechanism 300 to increase the air pressure inside. The printing material can flow from the accommodation cavity 124 into the forming cavity 140 more quickly. The gas injection connector 302 can be sealed with the forming mechanism 100 to achieve reliable gas injection.

In one embodiment, as shown in FIG. 1 and FIG. 6, the printing device further includes a gas injection mechanism 300. The gas injection mechanism 300 is disposed on the limiting part 402. The gas injection mechanism 300 is provided with a gas injection connector 302. When the limiting part 402 is in a state of limiting engagement with the platform assembly 120, the gas injection connector 302 is engaged with the forming mechanism 100 to communicate with the accommodation cavity 124.

In the embodiment, the gas injection mechanism 300 and the limiting part 402 can be integrated. When the limiting part 402 is in limiting engagement with the platform assembly 120, the gas injection connector 302 of the gas injection mechanism 300 communicates with the accommodation cavity 124 of the forming mechanism 100, thus achieving that when the limiting part 402 is in limiting engagement with the platform assembly 120, gas can be injected into the accommodation cavity 124 through the gas injection connector 302 of the gas injection mechanism 300 to increase the air pressure inside, and the printing material can flow from the accommodation cavity 124 into the forming cavity 140 more quickly.

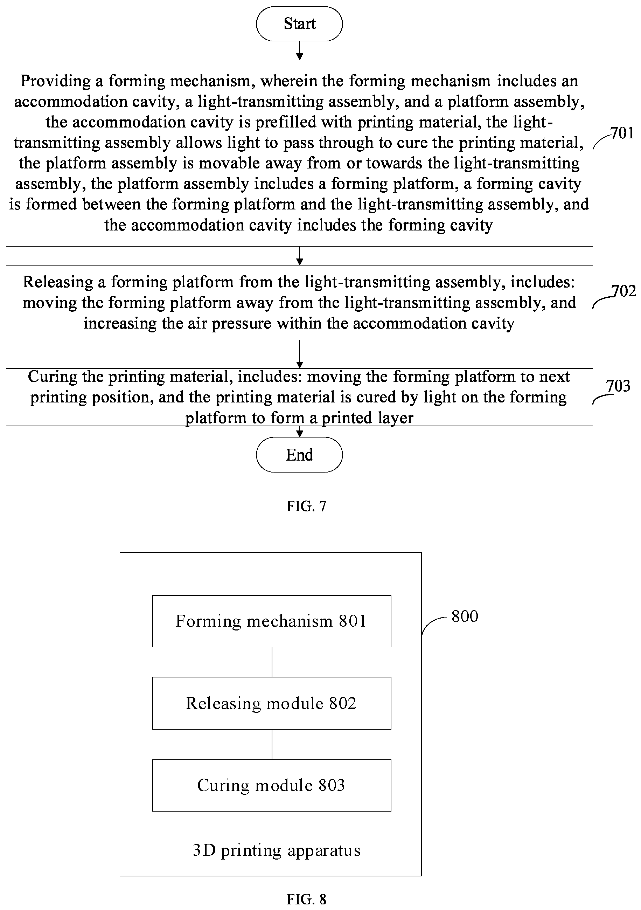

Please refer to FIG. 7, which is a flowchart of a 3D printing method provided by an embodiment of the present application. The method can be applied to the printing device shown in any of the embodiments in FIGS. 1-6. The method includes the following steps:

Step 701: providing a forming mechanism 100, wherein the forming mechanism 100 includes an accommodation cavity 124, a light-transmitting assembly 111, and a platform assembly 120, the accommodation cavity 124 is prefilled with printing material, the light-transmitting assembly 111 allows light to pass through to cure the printing material, the platform assembly 120 is movable away from or towards the light-transmitting assembly 111, the platform assembly 120 includes a forming platform 121, a forming cavity 140 is formed between the forming platform 121 and the light-transmitting assembly 111, and the accommodation cavity 124 includes the forming cavity 140.

Step 702:releasing a forming platform 121 from the light-transmitting assembly 111, includes: moving the forming platform 121 away from the light-transmitting assembly 111, and increasing the air pressure within the accommodation cavity 124;

Step 703: curing the printing material, includes: moving the forming platform 121 to next printing position, and the printing material is cured by light on the forming platform 121 to form a printed layer.

The above 3D printing method first provides a forming mechanism 100 including an accommodation cavity 124 and a forming cavity 140. The accommodation cavity 124 is prefilled with printing material. The platform assembly 120 is movable away from or towards the light-transmitting assembly 111. By moving the forming platform 121 away from the light-transmitting assembly 111, release of the printing layer is achieved, and simultaneously increasing the air pressure within the accommodation cavity 124 causes the printing material inside the accommodation cavity 124 to enter the forming cavity 140 more quickly. As the forming platform 121 moves away from the light-transmitting assembly 111, the forming cavity 140 becomes larger. Light enters the forming cavity 140 through the light-transmitting assembly 111. In the curing step, when the forming platform 121 is moved to the next printing position, by means of light curing, the printing material within the forming cavity 140 is cured on the forming platform 121 to form the printing layer, achieving layer-by-layer printing. In this way, by increasing the air pressure in the accommodation cavity 124, the printing material is quickly transferred from the accommodation cavity 124 to the forming cavity 140, the printing method is not limited by high-viscosity resin materials, the printing material can transfer more smoothly, improving printing efficiency. The bonding accuracy between printing layers and forming efficiency are improved.

In one embodiment, the accommodation cavity 124 can be a sealed cavity to facilitate increasing the air pressure inside the accommodation cavity 124 by injecting gas. Optionally, if the accommodation cavity 124 is not a sealed cavity, the accommodation cavity 124 can also be a cavity where the gas injection rate is greater than the gas leakage rate when gas is injected into the accommodation cavity 124, ensuring that the air pressure inside the accommodation cavity 124 can be increased.

In one embodiment, increasing the air pressure within the accommodation cavity 124 includes: increasing the air pressure within the accommodation cavity 124 to a first air pressure, the first air pressure being greater than an ambient air pressure.

In the embodiment, the first air pressure inside the accommodation cavity 124 during the releasing step can be higher than the ambient air pressure, creating an air pressure difference between the accommodation cavity 124 and the external environment, improving releasing efficiency.

In one embodiment, increasing the air pressure within the accommodation cavity 124 to the first air pressure, the first air pressure being greater than the ambient air pressure, and the air pressure difference between inside and outside the accommodation cavity 124 pushes the forming platform 121 to move away from the light-transmitting assembly 111.

In the embodiment, by increasing the air pressure in the accommodation cavity 124 to the first air pressure greater than the ambient air pressure, a directional pressure difference is formed between the inside of the accommodation cavity 124 and the ambient air pressure, causing the air pressure difference to directly drive the forming platform 121 to move away from the light-transmitting assembly 111, replacing the traditional purely mechanical driving mode. Optionally, during the releasing step, the uniform thrust generated by the air pressure difference, coordinated with the limit control of the driving module 400, can achieve precise control over the displacement amount of the forming platform 121, ensuring successful release.

In one embodiment, after the release is completed, the method further includes: reducing the air pressure within the accommodation cavity 124 to a second air pressure, the second air pressure being less than the first air pressure, and the second air pressure being not less than the ambient air pressure.

In the embodiment, by precisely releasing pressure from the accommodation cavity 124 after release, the air pressure inside the accommodation cavity 124 after pressure release is lower than a releasing pressure, preventing the accommodation cavity 124 from remaining at high pressure. Furthermore, the second air pressure inside the accommodation cavity 124 after pressure release is not less than the ambient air pressure. The second air pressure can be equal to the ambient air pressure or other air pressure values greater than the ambient air pressure, therefore preventing deformation when the light-transmitting assembly 111 is a flexible member and also prevents plate dropping, and improving printing reliability.

Optionally, the pressure release can be achieved smoothly in coordination with the gas injection mechanism 300, or a pressure relief valve can be configured for the accommodation cavity 124 to achieve pressure release.

In one embodiment, the releasing step includes: moving the forming platform 121 away from the light-transmitting assembly 111 by a preset distance.

In the step, the light-transmitting assembly 111 includes a release film. Before releasing, the printing layer formed on the forming platform 121 may be tightly attached to the release film on the light-transmitting assembly 111. Releasing refers to the process of separating the printing layer from the release film. By moving the forming platform 121 away from the light-transmitting assembly 111 by a preset distance, the printing layer on the forming platform 121 is moved away from the release film, completing the release. By configuring the preset distance, precise constraint on the displacement amount of the platform assembly 120 during the release step is achieved, allowing the printing layer to successfully leave the release film.

Optionally, it can be determined whether releasing is completed by detecting whether the distance the forming platform 121 moves away from the light-transmitting assembly 111 reaches the preset distance, or by other methods to detect whether the printing layer is separated from the release film.

In one embodiment, the driving mode for the forming platform 121 includes one or more of the following modes: pneumatic driving, mechanical driving, or a combination of the pneumatic driving and the mechanical driving. Multiple driving modes can be flexibly selected according to actual needs.

In one embodiment, the method further includes: providing a driving module 400, wherein the driving module 400 includes a driving member 401 and a limiting part 402, the driving member 401 is drivingly connected to the limiting part 402, the limiting part 402 is in limiting engagement or fixed connection with the platform assembly 120.

In the embodiment, the driving module 400, through the driving connection between the driving member 401 and the limiting part 402, combined with the limiting engagement or fixed connection between the limiting part 402 and the platform assembly 120, enables the driving module 400 to drive the limiting part 402 to move via the driving member 401. The limiting part 402 can limit the displacement amount of the platform assembly 120, for example, achieving precise control over the movement distance of the platform assembly 120 during the releasing step or the curing step.

In one embodiment, the method further includes: providing a gas injection mechanism 300, wherein the gas injection mechanism 300 is provided with a gas injection connector 302, the gas injection connector 302 is engaged with the forming mechanism 100 to communicate with the accommodation cavity 124.

In the embodiment, the gas injection mechanism 300 directly communicates with the accommodation cavity 124 through the gas injection connector 302. Then, gas is injected into the accommodation cavity 124 through the gas injection connector 302 of the gas injection mechanism 300 to change the air pressure inside the accommodation cavity 124. For example, gas is injected into the accommodation cavity 124 through the gas injection connector 302 of the gas injection mechanism 300 to increase the air pressure inside, causing the air pressure difference between inside and outside the accommodation cavity 124 to squeeze the printing material from the accommodation cavity 124 into the forming cavity 140. The gas injection connector 302 can be sealed with the forming mechanism 100 to avoid air pressure fluctuations caused by bypass gas injection.

In one embodiment, the method further includes: providing a gas injection mechanism 300 disposed on the limiting part 402, wherein the gas injection mechanism 300 is provided with a gas injection connector 302, when the limiting part 402 is in a state of limiting engagement with the platform assembly 120, the gas injection connector 302 is engaged with the forming mechanism 100 to communicate with the accommodation cavity 124.

In the embodiment, the gas injection mechanism 300 and the limiting part 402 can be integrated. When the limiting part 402 is in limiting engagement with the platform assembly 120, the gas injection connector 302 of the gas injection mechanism 300 communicates with the accommodation cavity 124 of the forming mechanism 100, therefore achieving that when the limiting part 402 is in limiting engagement with the platform assembly 120, gas can be injected into the accommodation cavity 124 through the gas injection connector 302 of the gas injection mechanism 300 to increase the air pressure inside, causing the air pressure difference between inside and outside the accommodation cavity 124 to squeeze the printing material from the accommodation cavity 124 into the forming cavity 140.

Taking the printing material as resin liquid as an example, during the printing process, the resin liquid can be formed and cured on the forming platform 121. The light-transmitting assembly 111 can be installed at the bottom of the outer cylinder 110 and fixed with a film cover plate 130. The gas inlet of the installed forming mechanism 100 matches the gas injection connector 302 of the gas injection structure 300. The accommodation cavity 124 inside is filled with the stereolithography resin required for printing.

By controlling the gas injection mechanism 300 of the printing device to inject gas into the accommodation cavity 124 of the forming mechanism 100, since the accommodation cavity 124 is in communication with the forming cavity 140, the high pressure formed by the gas injected by the gas injection mechanism 300 forces the printing material to flow from the accommodation cavity 124 to the forming cavity 140 more quickly. That is, the printing material flows from the accommodation cavity 124 to the forming cavity 140 more quickly under the pressure of the injected gas.

Optionally, the gas injection process of the gas injection mechanism 300 can be controlled according to preset gas injection pressure parameters, precisely adjusting the gas pressure magnitude, thereby increasing the flow rate of the printing material from the accommodation cavity 124 into the forming cavity 140. The formation of the pressure difference between the inside and outside of the accommodation cavity 124 creates a driving force on the platform assembly 120 away from the light-transmitting assembly 111, which lifts the platform assembly 120, thereby promoting the movement of the platform assembly 120 along the direction away from the light-transmitting assembly 111. Therefore, the speed at which the printing material inside the accommodation cavity 124 flows into the forming cavity 140 is increased, and the movement of the platform assembly 120 away from the light-transmitting assembly 111 is also controlled. That is, moving the forming platform 121 away from the light-transmitting assembly 111 can be achieved by increasing the air pressure in the accommodation cavity 124. In other words, increasing the air pressure in the accommodation cavity 124 can achieve release. It is only necessary to ensure that the air pressure driving force formed on the platform assembly 120 is not less than the minimum force required to move the platform assembly 120 away from the light-transmitting assembly 111, i.e., the aforementioned pneumatic driving. In the implementation, the position of the platform assembly 120 movement is controlled by the limiting part 402. For example, the limiting part 402 moves away from the light-transmitting assembly to a target position/target distance and stops. The platform assembly 120 moves away from the light-transmitting assembly 111 to where the limiting part 402 is located and stops due to limitation by the limiting part 402. The platform assembly 120 can then move to the target position/achieve movement of the target distance. Further, the limiting part 402 and the platform assembly 120 can maintain the limiting engagement state and move synchronously.

Optionally, the lower pressure limit value can be 0 kp, and the upper pressure limit value can be 50 kp. During the gas injection process, the gradually increasing pressure value forming a progressive pressurization curve can be linear or nonlinear, and can be selected according to actual needs.

The releasing process includes controlling the forming platform 121 to move away from the light-transmitting assembly 111 to separate the printing layer from the light-transmitting assembly 111. The releasing process also includes injecting gas into the accommodation cavity 124 during releasing, utilizing the pressure difference between inside and outside the accommodation cavity 124 to apply opposing forces on the printing layer and the light-transmitting assembly 111, accelerating the separation of the printing layer from the light-transmitting assembly 111. The higher pressure inside the accommodation cavity 124 during releasing causes the printing material to flow more quickly between the printing layer and the light-transmitting assembly 111, which can further accelerate releasing and the backflow replenishment of printing material, thereby improving printing efficiency. Controlling the forming platform 121 to move away from the light-transmitting assembly 111 can be achieved through the aforementioned pneumatic driving mode or mechanical driving mode. Specifically, the platform assembly 120 is fixedly connected to the limiting part 402. The platform assembly 120 is driven to move away from the light-transmitting assembly 111 by the limiting part 402 moving away from the forming mechanism 100. The platform assembly 120 is driven to move towards the light-transmitting assembly 111 by the limiting part 402 moving towards the forming mechanism 100. Of course, the driving mode can also be a combination of the above pneumatic and mechanical methods, as long as it is ensured that the sum of the air pressure driving force formed on the platform assembly 120 and the mechanical driving force formed by the limiting part 402 on the forming mechanism 100 is not less than the minimum force required to move the platform assembly 120 away from the light-transmitting assembly 111.

For the various steps of the above method, please refer to the related descriptions in the foregoing embodiments for details, which will not be repeated here.

Please refer to FIG. 8, which is a 3D printing apparatus 800 according to an embodiment of the present application. The apparatus can be applied to the printing device shown in any of the embodiments in FIGS. 1-6. The apparatus includes a forming module 801, a releasing module 802, and a curing module 803. The functional principles of each module are as follows.

The forming module 801 is configured to provide a forming mechanism, the forming mechanism includes an accommodation cavity, a light-transmitting assembly, and a platform assembly. The accommodation cavity is prefilled with printing material. The light-transmitting assembly allows light to pass through to cure the printing material. The platform assembly is movable away from or towards the light-transmitting assembly. The platform assembly includes a forming platform. A forming cavity is formed between the forming platform and the light-transmitting assembly. The accommodation cavity includes the forming cavity.

The releasing module 802 is configured for releasing: moving the forming platform away from the light-transmitting assembly, and increasing the air pressure within the accommodation cavity.

The curing module 803 is configured for curing: moving the forming platform to the next printing position, and causing the printing material to be cured by light on the forming platform to form a printing layer.

In one embodiment, the accommodation cavity is a sealed cavity.

In one embodiment, the forming mechanism includes an outer cylinder. An outer cylinder chamber of the outer cylinder is the accommodation cavity. The outer cylinder includes the light-transmitting assembly disposed on one side of the outer cylinder chamber of the outer cylinder. The platform assembly is slidably and sealably connected to the outer cylinder.

In one embodiment, the forming mechanism includes an outer cylinder. The outer cylinder includes a light-transmitting assembly disposed on one side of an outer cylinder chamber of the outer cylinder. The platform assembly includes an inner cylinder. The inner cylinder is disposed within the outer cylinder chamber of the outer cylinder and is slidably and sealably connected to the outer cylinder. The forming platform is disposed on a side of the inner cylinder facing the light-transmitting assembly. An inner cylinder chamber of the inner cylinder is in communication with the forming cavity. The accommodation cavity includes the inner cylinder chamber of the inner cylinder.

In one embodiment, the forming mechanism further includes a first outer cylinder and a second outer cylinder. The first outer cylinder includes a light-transmitting assembly disposed on one side of a first outer cylinder chamber of the first outer cylinder. The platform assembly is disposed within the first outer cylinder chamber of the first outer cylinder and is slidably and sealably connected to the first outer cylinder. A second outer cylinder chamber of the second outer cylinder is in communication with the forming cavity. The accommodation cavity includes the second outer cylinder chamber.

In one embodiment, the releasing module 802 is specifically configured to increase the air pressure within the accommodation cavity to a first air pressure, the first air pressure being greater than an ambient air pressure.

In one embodiment, the releasing module 802 is specifically configured to increase the air pressure within the accommodation cavity to a first air pressure, the first air pressure being greater than the ambient air pressure, and an air pressure difference between inside and outside the accommodation cavity pushes the forming platform to move away from the light-transmitting assembly.

In one embodiment, the apparatus further includes a pressure release module, configured to, after the release is completed, reduce the air pressure within the accommodation cavity to a second air pressure, the second air pressure being less than the first air pressure, and the second air pressure being not less than the ambient air pressure.

In one embodiment, the releasing module 802 is configured to move the forming platform away from the light-transmitting assembly by a preset distance.

In one embodiment, a driving mode for the forming platform includes one or more of the following modes: pneumatic driving, mechanical driving, or a combination of the pneumatic driving and the mechanical driving.

In one embodiment, both the outer cylinder and the inner cylinder are cylinders. One axial side of the outer cylinder is an opening and the other axial side is the light-transmitting assembly. One axial side of the inner cylinder is provided with a vent and the other axial side is the forming platform. The inner sidewall of the outer cylinder and the outer sidewall of the inner cylinder are slidably and sealably fitted. The forming platform is oriented towards the light-transmitting assembly. A communication port connecting the forming cavity and the inner cylinder chamber of the inner cylinder is provided on the side of the inner cylinder where the forming platform is located.

In one embodiment, the apparatus further includes a driving unit, configured to provide a driving module. The driving module includes a driving member and a limiting part. The driving member is drivingly connected to the limiting part. The limiting part is in limiting engagement or fixed connection with the platform assembly.

In one embodiment, the apparatus further includes a first gas injection module, configured to provide a gas injection mechanism. The gas injection mechanism is provided with a gas injection connector. The gas injection connector is engaged with the forming mechanism to communicate with the accommodation cavity.

In one embodiment, the apparatus further includes a second gas injection module, configured to provide a gas injection mechanism. The gas injection mechanism is disposed on the limiting part. The gas injection mechanism is provided with a gas injection connector. When the limiting part is in a state of limiting engagement with the platform assembly, the gas injection connector is engaged with the forming mechanism to communicate with the accommodation cavity.

For a detailed description of the above 3D printing apparatus 800, please refer to the descriptions of the related method steps in the above embodiments. The implementation principles and technical effects are similar, and will not be repeated in the embodiment.

In the several embodiments provided in the application, it should be understood that the disclosed device and method can be implemented in other ways. For example, the device embodiments described above are merely illustrative. For example, the division of modules is only a logical function division. In actual implementation, there may be other division methods. For example, multiple modules can be combined or integrated into another system, or some features can be ignored or not executed.

The integrated modules implemented in the form of software function modules described above can be stored in a computer-readable storage medium. The above software function module is stored in a storage medium and includes several instructions to enable a computer device (which can be a personal computer, a server, a network device, etc.) or a processor to execute part of the steps of the methods in the various embodiments of the present application.

It should be understood that the above processor can be a Central Processing Unit (CPU), or other general - purpose processors, Digital Signal Processors (DSP), Application Specific Integrated Circuits (ASIC), etc. A general-purpose processor can be a microprocessor or the processor can also be any conventional processor, etc. The steps of the methods disclosed in combination with the present application can be directly embodied as being executed and completed by a hardware processor, or executed and completed by a combination of hardware and software modules in the processor. The memory may include a high-speed RAM memory, and may also include a non-volatile memory NVM, such as at least one disk memory, and can also be a U disk, a mobile hard disk, a read-only memory, a magnetic disk, or an optical disk, etc.

An exemplary storage medium is coupled to the processor so that the processor can read information from and write information to the storage medium. Of course, the storage medium can also be an integral part of the processor. The processor and the storage medium can be located in an ASIC. Of course, the processor and the storage medium can also exist as discrete components in an electronic device or a main control device.

It should be noted that, in the document, the terms "comprise", "include" or any other variation thereof are intended to cover non-exclusive inclusion, so that a process, method, article, or device that includes a series of elements includes not only those elements, but also other elements not explicitly listed, or elements inherent to such process, method, article, or device. In the absence of more restrictions, an element defined by the phrase "comprising a ..." does not exclude the presence of additional identical elements in the process, method, article, or device that includes the element.

The serial numbers of the above embodiments of the present application are for description only and do not represent the superiority or inferiority of the embodiments.

Through the description of the above embodiments, those skilled in the art can clearly understand that the methods in the above embodiments can be implemented by means of software plus a necessary general hardware platform, and of course, can also be implemented by hardware. In many cases, the former is a better implementation. Based on this understanding, the technical solution of the present application, in essence, or the part contributing to the prior art, can be embodied in the form of a software product. The computer software product is stored in a storage medium (such as ROM/RAM, magnetic disk, optical disc) and includes several instructions to enable a terminal device (which can be a mobile phone, computer, server, air conditioner, or network device, etc.) to execute the methods described in the various embodiments of the present application.

In the technical solution of the present application, the collection, storage, use, processing, transmission, provision, and disclosure of user data and other information involved are in compliance with relevant laws and regulations and do not violate public order and good morals.

The above are only preferred embodiments of the present application and are not intended to limit the patent scope of the present application. Any equivalent structure or equivalent process transformation made using the contents of the description and drawings of the present application, or directly or indirectly applied in other related technical fields, shall be similarly included in the patent protection scope of the present application.

## Claims

1. A three dimensional (3D) printing method, **characterized in that** the method comprises:
providing a forming mechanism (100) comprising an accommodation cavity (124), a light-transmitting assembly (111), and a platform assembly (120), the accommodation cavity (124) being prefilled with printing material, the light-transmitting assembly (111) allowing light to pass through to cure the printing material, the platform assembly (120) being movable away from or towards the light-transmitting assembly (111), the platform assembly (120) comprising a forming platform (121), a forming cavity (140) being formed between the forming platform (121) and the light-transmitting assembly (111), and the accommodation cavity (124) comprising the forming cavity (140);
releasing the forming platform (121) from the light-transmitting assembly (111), comprising: moving the forming platform (121) away from the light-transmitting assembly (111) by a preset distance, and increasing air pressure within the accommodation cavity (124) to a first air pressure, wherein the first air pressure is greater than an ambient air pressure, and an air pressure difference between inside and outside the accommodation cavity (124) pushes the forming platform (121) to move away from the light-transmitting assembly (111); a driving mode for the forming platform (121) comprises one or more of the following modes: pneumatic driving, mechanical driving, or a combination of the pneumatic driving and the mechanical driving, the accommodation cavity (124) is a sealed cavity;
curing the printing material, comprising: moving the forming platform (121) to a next printing position, and enabling the printing material to be cured by light on the forming platform (121) and forming a printing layer;
wherein, after releasing the forming platform (121) from the light-transmitting assembly (111), the method further comprises:
reducing the air pressure within the accommodation cavity (124) to a second air pressure, wherein the second air pressure is less than the first air pressure, and the second air pressure is greater than or equal to the ambient air pressure.

2. The method according to claim 1, **characterized in that** the forming mechanism (100) comprises an outer cylinder (110), an outer cylinder chamber of the outer cylinder (110) is the accommodation cavity (124), the outer cylinder (110) comprises the light-transmitting assembly (111) disposed on one side of the outer cylinder chamber, and the platform assembly (120) is slidably and sealably connected to the outer cylinder (110).

3. The method according to claim 1, **characterized in that** the forming mechanism (100) comprises an outer cylinder (110), the outer cylinder (110) comprises the light-transmitting assembly (111) disposed on one side of an outer cylinder chamber of the outer cylinder (110), the platform assembly (120) comprises an inner cylinder (123), the inner cylinder (123) is disposed within the outer cylinder chamber and is slidably and sealably connected to the outer cylinder (110), the forming platform (121) is disposed on a side of the inner cylinder (123) facing the light-transmitting assembly (111), an inner cylinder chamber of the inner cylinder (123) is in communication with the forming cavity (140), and the accommodation cavity (124) comprises the inner cylinder chamber.

4. The method according to claim 1, **characterized in that** the forming mechanism (100) further comprises a first outer cylinder (410) and a second outer cylinder (420), the first outer cylinder (410) comprises the light-transmitting assembly (111) disposed on one side of a first outer cylinder chamber of the first outer cylinder (410), the platform assembly (120) is disposed within the first outer cylinder chamber and is slidably and sealably connected to the first outer cylinder (410), a second outer cylinder chamber of the second outer cylinder (420) is in communication with the forming cavity (140), and the accommodation cavity (124) comprises the second outer cylinder chamber.

5. The method according to claim 3, **characterized in that** both the outer cylinder (110) and the inner cylinder (123) are cylinders, one axial side of the outer cylinder (110) is an opening and the other axial side of the outer cylinder (110) is the light-transmitting assembly (111), one axial side of the inner cylinder is provided with a vent and the other axial side of the inner cylinder (123) is the forming platform (121), an inner sidewall of the outer cylinder (110) and an outer sidewall of the inner cylinder (123) are slidably and sealably fitted, the forming platform (121) is oriented towards the light-transmitting assembly (111), and a communication port connecting the forming cavity (140) and the inner cylinder chamber of the inner cylinder (123) is provided on a side of the inner cylinder (123) where the forming platform (121) is located.

6. The method according to claim 1, **characterized in that** the method further comprises:
providing a driving module (400), wherein the driving module (400) comprises a driving member (401) and a limiting part (402), the driving member (401) is drivingly connected to the limiting part (402), and the limiting part (402) is in limiting engagement or fixed connection with the platform assembly (120);
providing a gas injection mechanism (300), wherein the gas injection mechanism (300) is disposed on the limiting part (402), the gas injection mechanism (300) is provided with a gas injection connector (302), and when the limiting part (402) is in a state of limiting engagement with the platform assembly (120), the gas injection connector (302) is engaged with the forming mechanism (100) to communicate with the accommodation cavity (124).

7. The method according to claim 1, **characterized in that** the method further comprises:
providing a gas injection mechanism (300), wherein the gas injection mechanism (300) is provided with a gas injection connector (302), and the gas injection connector (302) is engaged with the forming mechanism (100) to communicate with the accommodation cavity (124).

8. A forming mechanism (100), **characterized in that** the forming mechanism (100) comprises:
an accommodation cavity (124);
a light-transmitting assembly (111); and
a platform assembly (120), wherein the accommodation cavity (124) is prefilled with printing material, the light-transmitting assembly (111) allows light to pass through to cure the printing material, the platform assembly (120) is movable away from or towards the light-transmitting assembly (111), the platform assembly (120) comprises a forming platform (121), a forming cavity (140) is formed between the forming platform (121) and the light-transmitting assembly (111), and the accommodation cavity (124) comprises the forming cavity (140), the accommodation cavity (124) is a sealed cavity, a driving mode for the forming platform (121) comprises one or more of the following modes: pneumatic driving, mechanical driving, or a combination of the pneumatic driving and the mechanical driving.

9. The forming mechanism (100) according to claim 8, **characterized in that** the forming mechanism (100) comprises an outer cylinder (110), a first outer cylinder (410) and a second outer cylinder (420), an outer cylinder chamber of the outer cylinder (110) is the accommodation cavity (124), the outer cylinder (110) comprises the light-transmitting assembly (111) disposed on one side of the outer cylinder chamber, and the platform assembly (120) is slidably and sealably connected to the outer cylinder (110), the first outer cylinder (410) comprises the light-transmitting assembly (111) disposed on one side of a first outer cylinder chamber of the first outer cylinder (410), the platform assembly (120) is disposed within the first outer cylinder chamber and is slidably and sealably connected to the first outer cylinder (410), a second outer cylinder chamber of the second outer cylinder (420) is in communication with the forming cavity (140), and the accommodation cavity (124) comprises the second outer cylinder chamber.

10. The forming mechanism (100) according to claim 8, **characterized in that** the forming mechanism (100) comprises an outer cylinder (110), the outer cylinder (110) comprises the light-transmitting assembly (111) disposed on one side of a outer cylinder chamber of the outer cylinder (110), the platform assembly (120) comprises an inner cylinder (123), the inner cylinder (123) is disposed within the outer cylinder chamber and is slidably and sealably connected to the outer cylinder (110), the forming platform (121) is disposed on a side of the inner cylinder (123) facing the light-transmitting assembly (111), an inner cylinder chamber of the inner cylinder (123) is in communication with the forming cavity (140), and the accommodation cavity (124) comprises the inner cylinder chamber of the inner cylinder (123).

11. The forming mechanism (100) according to claim 10, **characterized in that** both the outer cylinder (110) and the inner cylinder (123) are cylinders, one axial side of the outer cylinder (110) is an opening and the other axial side of the outer cylinder (110) is the light-transmitting assembly (111), one axial side of the inner cylinder (123) is provided with a vent and the other axial side of the inner cylinder (123) is the forming platform (121), an inner sidewall of the outer cylinder (110) and an outer sidewall of the inner cylinder (123) are slidably and sealably fitted, the forming platform (121) is oriented towards the light-transmitting assembly (111), and a communication port connecting the forming cavity (140) and the inner cylinder chamber of the inner cylinder (123) is provided on a side of the inner cylinder (123) where the forming platform (121) is located.

12. A 3D printing device, comprising:
a forming mechanism (100) comprising an accommodation cavity (124), a light-transmitting assembly (111), and a platform assembly (120), wherein the accommodation cavity (124) is prefilled with printing material, the light-transmitting assembly (111) allows light to pass through to cure the printing material, the platform assembly (120) is movable away from or towards the light-transmitting assembly (111), the platform assembly (120) comprises a forming platform (121), a forming cavity (140) is formed between the forming platform (121) and the light-transmitting assembly (111), and the accommodation cavity (124) comprises the forming cavity (140).

13. The device according to claim 12, **characterized in that** the device further comprising a driving module (400), the driving module (400) comprises a driving member (401) and a limiting part (402), the driving member (401) is drivingly connected to the limiting part (402), and the limiting part (402) is in limiting engagement or fixed connection with the platform assembly (120).

14. The device according to claim 12, **characterized in that** the device further comprising a gas injection mechanism (300) provided with a gas injection connector (302), and the gas injection connector (302) is engaged with the forming mechanism (100) to communicate with the accommodation cavity (124).

15. The device according to claim 13, **characterized in that** the device further comprising a gas injection mechanism (300), the gas injection mechanism (300) is disposed on the limiting part (402), the gas injection mechanism (300) is provided with a gas injection connector (302), and when the limiting part (402) is in a state of limiting engagement with the platform assembly (120), the gas injection connector (302) is engaged with the forming mechanism (100) to communicate with the accommodation cavity (124).
